# EUROPEAN PATENT APPLICATION

(11) **EP 3 346 305 A1**
(43) Date of publication of application: **11.07.2018**
(21) Application number: 17020121.4
(22) Date of filing: 28.03.2017
(51) Int. Cl.: G02B 6/02

(54) **OPTICAL FIBER FOR INDOOR APPLICATIONS**

(30) Priority: 06.01.2017 IN 201721001948
(71) Applicant: Sterlite Technologies Ltd, Maharashtra 431 136 (IN)
(72) Inventor: Pandey, Anand, 431136 Maharashtra (IN); Kumar, Sravan, 431136 Maharashtra (IN); Coppin, Phill, 431136 Maharashtra (IN); Sahoo, Kishore, 431136 Maharashtra (IN)
(74) Representative: Norris, Timothy Sweyn

(57) **Abstract**

Disclosed is an optical fiber (100). The optical fiber (100) a core region (105) defined by a region around a central longitudinal axis (130). In addition, the optical fiber (100) a cladding region (110). The cladding region (110) surrounds the core region (105). Moreover, the optical fiber (100) includes a first coating layer (115). The first coating layer (115) surrounds the cladding region (110). Further, the optical fiber (100) includes a second coating layer (120). The second coating layer (120) surrounds the first coating layer (115). Furthermore, the optical fiber (100) includes a third coating layer (125). The third coating layer (125) surrounds the second coating layer (120). Also, the optical fiber (100) includes a fourth coating layer (130). The fourth coating layer (130) surrounds the third coating layer (125). The first coating layer (115) is made of UV curable acrylates.

## Description

### TECHNICAL FIELD

The present disclosure relates to the field of fiber optic transmission and more specifically, the present disclosure relates to an optical fiber for indoor applications.

### BACKGROUND

Optical fibers have formed the backbone of modern telecommunication systems around the world. These optical fibers are widely used for setting up a large optical fiber network for various applications. One such application is the fiber to the home application. The fiber to the home is an effective and fast growing method for providing high bandwidth to consumers and business. The fiber to the home method enables fast internet and voice services in order to meet the growing bandwidth and high performance demands. In order to meet the growing demands of these optical fibers having high performance capabilities, these optical fibers are typically coated with multiple coating layers. These multiple coating layers are a rather significant component that determines physical fiber optic characteristics such as bending, chemical resistance, and mechanical strength. For example, these multiple coating layers protect the optical fibers from mechanical damage and preserve the ability of the optical fibers to transmit signals.

In one of the prior art with patent number US6768853B2, a buffered optical fiber is disclosed. The optical fiber includes a core and a cladding. In addition, the optical fiber cable includes a first layer. The first layer is positioned around the optical fiber. The first layer is made of a UV curable acrylate material. Moreover, the optical fiber includes a second layer. The second layer surrounds the first layer. The second layer is made of UV curable acrylate. Further, the optical fiber includes a third layer. The third layer surrounds the second layer. The third layer is made of UV curable acrylate material having a first modulus for protecting the optical fiber from micro bending forces and enhancing low temperature performance. Furthermore, the optical fiber includes a fourth layer. The fourth layer surrounds the third layer. The fourth layer is an outer buffer layer. The fourth layer is made of a high modulus thermoplastic material. However, the combination of material and limited diameter range does not provide sufficient mechanical and tensile strength to the optical fiber.

In light of the above stated discussion, there exists a need for an optical fiber having required strength for in-house applications.

### SUMMARY

According to one embodiment, an optical fiber comprises a core region defined by a region around a central longitudinal axis of the optical fiber, a cladding region surrounding the core region, a first coating layer surrounding the cladding region, a second coating layer surrounding the first coating layer, a third coating layer surrounding the second coating layer and a fourth coating layer surrounding the third coating layer. The first coating layer is made of UV curable acrylates. The first coating layer has a first diameter in a range of 150 µm - 250 µm. The first coating layer has a modulus in a range of 0.3 MPa to 3 Mpa. The second coating layer is made of UV curable acrylates. The second coating layer has a second diameter in a range of 250 µm - 350 µm. The second coating layer has a modulus in a range of 0.5 MPa to 1.2 Gpa. The third coating layer is made of UV curable acrylates. The third coating layer has a third diameter in a range of 350 µm - 450 µm. The third coating layer has a modulus in a range of 0.5 MPa to 1.2 Gpa. The fourth coating layer is made of UV curable acrylates. The fourth coating layer has a fourth diameter in a range of 550 µm - 650 µm. The fourth coating layer has a modulus of greater than 1.2 Gpa. The range of diameter and a type of material used for the first coating layer, the second coating layer, the third coating layer and the fourth coating layer provides strength greater than or equal to 5GPa to the optical fiber.

Embodiments of the present disclosure substantially eliminate or at least partially address the aforementioned problems in the prior art, and provides an optical fiber for indoor applications. The optical fiber has strength greater than equal to 5 GPa. The optical fiber is of reduced size. The optical fiber can be directly deployed for in-house applications without any need of cabling or buffering over the optical fiber and hence reduces cost of manufacturing. Moreover, the optical fiber has crush resistant properties suitable for an indoor staple installation and can withstand harsh environment. The optical fiber is flexible and can be resist effects of chemicals and moisture in contact.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

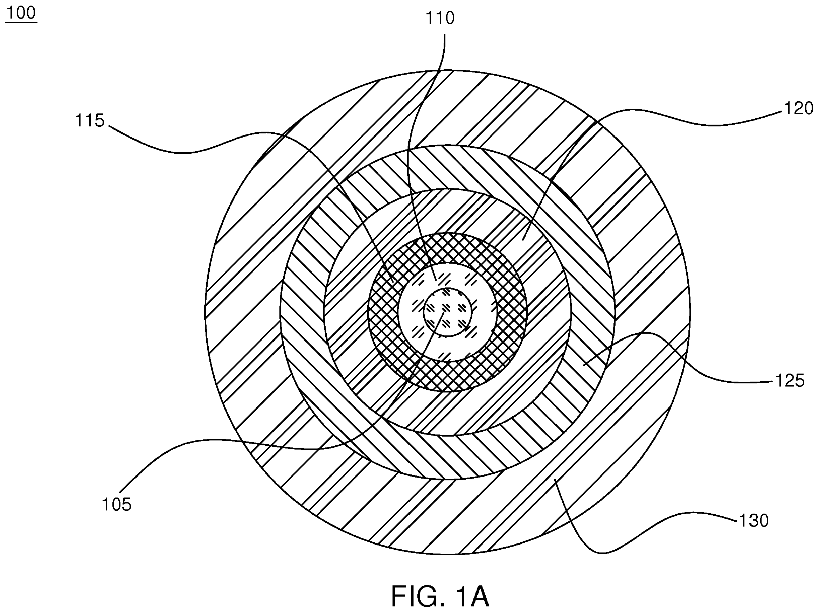

- FIG. 1A: illustrates a cross sectional view of an optical fiber, in accordance with an embodiment of the present disclosure; and

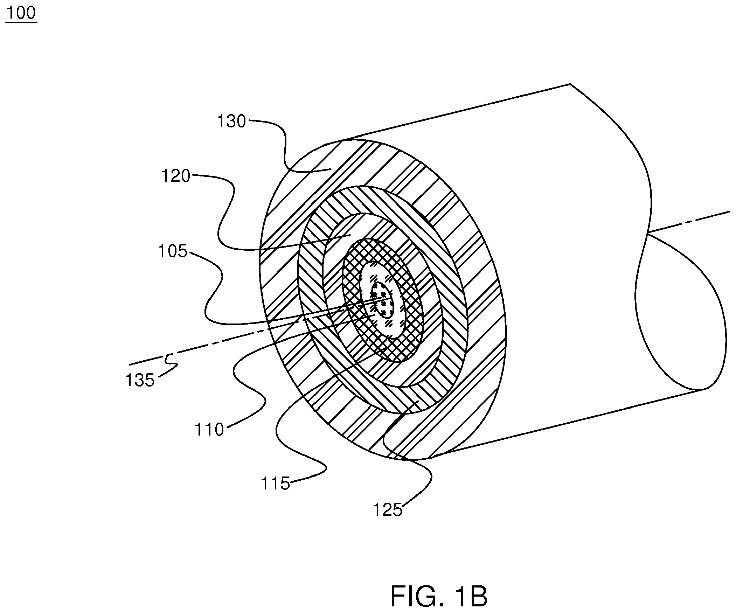

- FIG. 1B: illustrates a perspective view of the optical fiber of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross-sectional view of an optical fiber **100,** in accordance with an embodiment of the present disclosure. The optical fiber **100** is a fiber used for transmitting information as light pulses from one end to another. The optical fiber **100** is a thin strand of glass or plastic capable of transmitting optical signals. In addition, the optical fiber **100** allows transmission of information in the form of optical signals over long distances. In addition, the optical fiber **100** allows the transmission of information at high bandwidth. In general, a bandwidth is a measure of data-carrying capacity of the optical fiber **100.** In an embodiment of the present disclosure, the optical fiber **100** is a small diameter fiber.

In an embodiment of the present disclosure, the optical fiber **100** is utilized for broadband communication applications. In another embodiment of the present disclosure, the optical fiber **100** may be utilized for other applications. Moreover, the optical fiber **100** complies with specific telecommunication standards. The telecommunication standards are defined by International Telecommunication Union-Telecommunication (hereinafter "ITU-T"). In an embodiment of the present disclosure, the optical fiber **100** is compliant with G.657 recommendation standard of ITU-T. Furthermore, the ITU-T G.657 recommendation describes geometrical, mechanical and transmission attributes of a single mode bend insensitive optical fiber (shown as the optical fiber **100).**

In an embodiment of the present disclosure, the optical fiber **100** is a bend insensitive optical fiber. The bend insensitive optical fiber is characterized to have low sensitivity to fiber macro-bends and micro-bends. Further, the ITU-T G.657 standard defines a plurality of characteristics associated with the optical fiber **100.** The plurality of characteristics includes a mode field diameter, a cladding diameter, a cable cut-off wavelength, a macro bending loss, a dispersion and a refractive index. In addition, the plurality of characteristics includes a core concentricity error, a cladding non-circularity, an attenuation coefficient and the like.

The cladding non-circularity is defined as a percentage difference between a maximum radial deviation and minimum radial deviation between a center of core and cladding of the optical fiber **100** normalized to the diameter of the body. In an embodiment of the present disclosure, the optical fiber **100** has the cladding non-circularity parameter of less than equal to 1 %. The core concentricity error is defined as a scalar distance between the center of the core and the center of the cladding in micrometers. In an embodiment of the present disclosure, the optical fiber **100** has a core concentricity error of less than equal to 0.5 µm. Furthermore, the telecommunication standards are defined by International Electrotechnical Commission (hereinafter "IEC"). In an embodiment of the present disclosure, the optical fiber **100** is compliant with IEC 60794-2 standard.

Going further, the optical fiber **100** is manufactured by adopting a plurality of manufacturing techniques. In general, the manufacturing of optical fibers has two major stages. The first stage involves the manufacturing of optical fiber preforms and the second stage involves drawing the optical fibers from the optical fiber preforms. In general, the quality of optical fibers is determined during the manufacturing of the optical fiber preforms. So, a lot of attention is paid towards the manufacturing the optical fiber preforms. These optical fiber preforms include an inner glass core surrounded by a glass cladding having a lower index of refraction. Also, these preforms are manufactured as per the requirements related to a specific refractive index profile, a core diameter, a cladding diameter and the like. The plurality of manufacturing techniques adopted for manufacturing the optical fiber **100** includes but may not be limited to modified chemical vapor deposition, outside vapor deposition, vapor axial deposition, rod-in cylinder (RIC) and the like.

The optical fiber **100** includes a core region **105** a cladding region **110,** a first coating layer **115,** a second coating layer **120,** a third coating layer **125** and a fourth coating layer **130.** The core region **105** is an inner part of the optical fiber **100.** Moreover, the core region **105** and the cladding region **110** are formed during the manufacturing stage of the optical fiber **100.** The core region **105** is defined by a region around a central longitudinal axis **135** of the optical fiber **100.** In general, the core region **105** is defined as the region around the central longitudinal axis **135** of the optical fiber **100** through which light transmits. Furthermore, the central longitudinal axis **135** is associated with the optical fiber **100.** In general, the central longitudinal axis **135** of the optical fiber **100** passes through a geometrical center of the optical fiber **100** and is parallel to a length of the optical fiber **100** (as shown in **FIG. 1B**). In addition, the central longitudinal axis **135** is mutually perpendicular to a cross-section of the optical fiber **100.** The core region **105** is doped with at least one of germanium, fluorine or a combination of both.

Further, the cladding region **110** of the optical fiber **100** surrounds the core region **105** of the optical fiber **100.** In general, the cladding region **110** is defined as a region around the core region **105** which confines a light ray to travel within the core region **105** of the optical fiber **100.** In addition, the cladding region **110** confines the light ray in the core region **105** based on total internal reflection at a core-cladding interface. In general, total internal reflection in optical fiber **100** is a phenomenon of complete reflection of the light ray reaching the core-cladding interface. Furthermore, the core region **105** has a refractive index which is greater than a refractive index of the cladding region **110.** In an embodiment of the present disclosure, the core region **105** has a higher refractive index than the cladding region **110.** In an embodiment of the present disclosure, the cladding region **110** of the optical fiber **100** has a diameter in a range of 124 µm - 126 µm.

Going further, the optical fiber **100** includes the first coating layer **115,** the second coating layer **120,** the third coating layer **125** and the fourth coating layer **130.** The first coating layer **115** surrounds the cladding region **110** of the optical fiber **100.** In an embodiment of the present disclosure, the first coating layer **115** is an inner coating layer. In an embodiment of the present disclosure, the first coating layer **115** is in direct contact with the cladding region **110.** In another embodiment of the present disclosure, one or more adhesive layers are present between the first coating layer **115** and the cladding region **110.**

The first coating layer **115** serves as a cushion and protects the optical behavior of the optical fiber **100** during bending, cabling and spooling of the optical fiber **100.** In addition, the first coating layer **115** protects the core region **105** and preserves the ability of the optical fiber **100** to transmit signals. In an embodiment of the present disclosure, the first coating layer **115** is present between the cladding region **110** and the second coating layer **120.** Moreover, the first coating layer **115** has a first diameter. The first diameter lies in the range of 150 µm - 250 µm.

Further, the first coating layer **115** is formed of a material having low Young's modulus. The first coating layer **115** has a modulus in a range of 0.3 MPa to 3 MPa. The modulus or Young's modulus is a measure of stiffness of an elastic material. The first coating layer **115** is made of ultraviolet curable acrylates (hereinafter "UV curable acrylates"). Furthermore, the second coating layer **120** surrounds the first coating layer **115.** In an embodiment of the present disclosure, the second coating layer **120** is a first intermediate coating layer. In an embodiment of the present disclosure, the second coating layer **120** is in direct contact with the first coating layer **115.** In another embodiment of the present disclosure, the one or more adhesive layers are present between the second coating layer **120** and the first coating layer **115.** Also, the second coating layer **120** is made of UV curable acrylates. In addition, the UV curable acrylates provide mechanical strength to the optical fiber **100.** UV cured acrylate material have low Young's modulus. Furthermore, the second coating layer **120** has a second diameter. The second diameter lies in the range of 250 µm - 350 µm. The second coating layer **120** has a modulus in a range of 0.5 MPa - 1.2 GPa. In an embodiment of the present disclosure, the value of modulus for the second coating layer **120** is selected based on the modulus value of the first coating layer **115.**

Furthermore, the third coating layer **125** surrounds the second coating layer **120.** In an embodiment of the present disclosure, the third coating layer **125** is a second intermediate coating layer. In an embodiment of the present disclosure, the third coating layer **125** is in direct contact with the second coating layer **120.** In another embodiment of the present disclosure, the one or more adhesive layers are present between the third coating layer **125** and the second coating layer **120.** The third coating layer **125** is made of ultraviolet curable acrylates. Furthermore, the third coating layer **125** has a third diameter. The third diameter lies in the range of 350 µm - 450 µm. In an embodiment of the present disclosure, the third coating layer **125** may be colored. In another embodiment of the present disclosure, the third coating layer **125** may not be colored. The third coating layer **125** has a modulus in a range of 0.5 MPa - 1.2 GPa. In an embodiment of the present disclosure, the value of modulus for the third coating layer **125** is selected based on the modulus value of the first coating layer **115.**

Furthermore, the fourth coating layer **130** surrounds the third coating layer **125.** In an embodiment of the present disclosure, the fourth coating layer **130** is an outer coating layer. In an embodiment of the present disclosure, the fourth coating layer **130** is in direct contact with the third coating layer **125.** In another embodiment of the present disclosure, the one or more adhesive layers are present between the fourth coating layer **130** and the third coating layer **125.** The fourth coating layer **130** protects the optical fiber **100** from environmental exposure, mechanical damages, chemical attacks and the like. In addition, the fourth coating layer **130** enables an easy deployment of optical fiber **100.** The fourth coating layer **130** is made of ultraviolet curable acrylates. Furthermore, the fourth coating layer **130** has a fourth diameter. The fourth diameter lies in the range of 550 µm - 650 µm. In an embodiment of the present disclosure, the fourth coating layer **130** may be colored. In another embodiment of the present disclosure, the third coating layer **130** may not be colored. The fourth coating layer **130** has a modulus of greater than 1.2 GPa. In an embodiment of the present disclosure, the optical fiber **100** may not include the fourth coating layer **130.**

The combination of the first coating layer **115,** the second coating layer **120,** the third coating layer **125** and the fourth coating layer **130** maintains the optical performance of the optical fiber **100.** In addition, the range of diameter and a type of material used for the first coating layer **115,** the second coating layer **120,** the third coating layer **125** and the fourth coating layer **130** provides strength greater than or equal to 5Giga-Pascal (hereinafter "GPa") to the optical fiber **100.** The combination of material and diameter of different layers of the optical fiber **100** provides mechanical and tensile strength to the optical fiber **100.** Different material combinations of the first coating layer **115,** the second coating layer **120,** the third coating layer **125** and the fourth coating layer **130** may be used to maintain the optical performance and strength of the optical fiber **100.** Moreover, the optical fiber **100** has four coatings to facilitate direct installation in in-house or harsh environments.

Furthermore, different diameter combinations associated with the first coating layer **115,** the second coating layer **120,** the third coating layer **125** and the fourth coating layer **130** may be used to maintain the strength of the optical fiber **100** to less than 5 GPa. In an embodiment of the present disclosure, the strength of the optical fiber **100** is no less than 5 GPa when the first coating layer **115** has a diameter of 150 µm, the second coating layer **120** has the diameter of 250 µm, the third coating layer **125** has the diameter of 350 µm and the fourth coating layer **130** has the diameter of 550 µm. In another embodiment of the present disclosure, the strength of the optical fiber **100** is no less than 5 GPa when the first coating layer **115** has the diameter of 250 µm, the second coating layer **120** has the diameter of 350 µm, the third coating layer **125** has the diameter of 450 µm and the fourth coating layer **130** has the diameter of 650 µm. In yet another embodiment of the present disclosure, the strength of the optical fiber **100** is no less than 5 GPa when the first coating layer **115** has the diameter of 200 µm, the second coating layer **120** has the diameter of 300 µm, the third coating layer **125** has the diameter of 400 µm and the fourth coating layer **130** has the diameter of 600 µm.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber (100) comprising:
a core region (105) defined by a region around a central longitudinal axis (135) of the optical fiber (100);
a cladding region (110) surrounding the core region (105);
a first coating layer (115) surrounding the cladding region (110);
a second coating layer (120) surrounding the first coating layer (115);
a third coating layer (125) surrounding the second coating layer (120); and
a fourth coating layer (130) surrounding the third coating layer (125),
**characterized in that**
the first coating layer (115) is made of UV curable acrylates, the first coating layer (115) has a first diameter in a range of 150 µm - 250 µm, the first coating layer (115) has a modulus in a range of 0.3 MPa to 3 MPa, the second coating layer (120) is made of UV curable acrylates, the second coating layer (120) has a second diameter in a range of 250 µm - 350 µm, the second coating layer (120) has a modulus in a range of 0.5 MPa to 1.2 GPa, the third coating layer (125) is made of UV curable acrylates, the third coating layer (125) has a third diameter in a range of 350 µm - 450 µm, the third coating layer (125) has a modulus in a range of 0.5 MPa to 1.2 GPa, the fourth coating layer (130) is made of UV curable acrylates, the fourth coating layer (130) has a fourth diameter in a range of 550 µm - 650 µm, the fourth coating layer (130) has a modulus of greater than 1.2 GPa and the range of diameter and a type of material used for the first coating layer (115), the second coating layer (120), the third coating layer (125) and the fourth coating layer (130) provides strength greater than or equal to 5GPa to the optical fiber (100).

2. The optical fiber (100) as claimed in claim 1, wherein the optical fiber (100) is a bend insensitive fiber.

3. The optical fiber (100) as claimed in claim 1, wherein the optical fiber (100) meets requirements of ITU-T G657 A2.

4. The optical fiber (100) as claimed in claim 1, wherein the optical fiber (100) meets requirements of ITU-T G657 B3.

5. The optical fiber (100) as claimed in claim 1, wherein the optical fiber (100) complies with IEC 60794-2 standard.

6. The optical fiber (100) as claimed in claim 1, wherein the cladding region (110) has a diameter in a range of 124 µm - 126 µm.

7. The optical fiber (100) as claimed in claim 1, wherein the optical fiber (100) has a cladding non-circularity parameter of less than equal to 1 %.

8. The optical fiber (100) as claimed in claim 1, wherein the optical fiber (100) has a core concentricity error of less than equal to 0.5 µm.
